# EUROPÄISCHE PATENTANMELDUNG

(11) **EP 1 543 912 A1**
(43) Veröffentlichungstag der Anmeldung: **22.06.2005**
(21) Anmeldenummer: 03029101.7
(22) Anmeldetag: 17.12.2003
(51) Int. Cl.: B23K 20/12

(54) **Verfahren zur Bearbeitung eines Bauteils und Bauteil**

(71) Anmelder: SIEMENS AKTIENGESELLSCHAFT, 80333 München (DE)
(72) Erfinder: Steinbach, Jan, Dr., 13353 Berlin (DE); Wilkenhöner, Rolf, Dr., 10589 Berlin (DE)

(57) **Zusammenfassung**

Verfahren zur Bearbeitung eines Bauteils zum Schließen von Rissen haben den Nachteil, dass hohe Temperaturen und Zusatzmaterialien verwendet werden müssen, um den gewünschten Effekt zu erreichen.

Bei dem erfindungsgemäßen Verfahren werden bei geringeren Temperaturen keine Zusatzmaterialien benötigt. Dies geschieht durch eine Oberflächenbehandlung des Bauteils (1) mittels einer Mechtrode (7), die mit einer Kraft (F) unter gleichzeitiger Rotation auf die Oberfläche (4) des Bauteils (1) aufgedrückt wird, um es örtlich begrenzt in einen teigigen Zustand zu versetzen, wodurch die Makro/Mikrostruktur des Bauteils (1) verändert wird.

## Beschreibung

Die Erfindung betrifft ein Verfahren zur Bearbeitung eines Bauteils nach dem Oberbegriff des Anspruchs 1 und Bauteil nach Anspruch 17.

Oberflächen von Bauteilen müssen für verschiedene Anwendungen modifiziert, bspw. gehärtet werden, wobei sie einem Verfahren zur Oberflächenbearbeitung unterzogen werden.

Ebenso gibt es verschiedene Verfahren, um Risse an der Oberfläche eines Bauteils wieder zu verschließen. Dies kann durch Zuschweißen, Zulöten oder elektrolytische Verfahren erfolgen. In all diesen Fällen muss jedoch Material wieder hinzugefügt werden. Dieses Material entspricht in der Regel nicht dem Material des Bauteils, so dass es zur Verschlechterung der chemischen oder mechanischen Eigenschaften des Bauteils kommt.

Bei dem Reibrührschweißverfahren wird eine sogenannte Mechtrode unter Krafteinwirkung auf die Oberfläche des Bauteils gedrückt und unter Rotation der Mechtrode über die Oberfläche bewegt. Dabei wird unter dem Einfluss der durch Reibung entstehenden Schweißwärme Material von der Mechtrode abgetragen und auf der Oberfläche des Bauteils aufgetragen. Es handelt sich also um ein Beschichtungsverfahren.
Solche Verfahren sind aus der US-PS 6,457,629 B1, der US-PS 4,930,675, der GB 2 268 430 A, der WO 90/02015 sowie aus der US-PS 5,077,081 bekannt.

Ebenso ist aus der EP 0 887 143 A1 und der US 2002/0066768 A1 das Verbinden von Bauteilen mittels Reibschweißen bekannt, bei dem ebenfalls Zusatzmaterial verwendet werden muss.

Das Problem bei den Verfahren zur Behandlung von Oberflächenrissen besteht darin, dass artfremdes Material (Lotmaterial) hinzugefügt werden muss, welches die Eigenschaften des Bauteils negativ beeinflußt.

Es ist daher Aufgabe der Erfindung verbesserte Verfahren und Bauteil aufzuzeigen, die diesen Nachteil überwinden.

Die Aufgabe wird gelöst durch ein Verfahren gemäß Anspruch 1. Die Aufgabe wird weiterhin gelöst durch ein Bauteil gemäß Anspruch 17.

In den Unteransprüchen sind weitere vorteilhafte Ausgestaltungen des Verfahrens aufgelistet.
Die in den Unteransprüchen aufgelisteten Maßnahmen können in vorteilhafter Art und Weise miteinander verknüpft werden.

Der besondere Vorteil des Verfahrens liegt darin, dass bei der Mechtrode kein Materialabtrag erfolgt. Es handelt sich bei dem Verfahren also nicht um ein Beschichtungsverfahren. Die Parameter für die Bewegung der Mechtrode und das Material der Mechtrode sind so ausgewählt, dass die Oberfläche des behandelten Bauteils örtlich lediglich in einen teigigen Zustand versetzt wird und die Risse wie beim Schmieden unter Krafteinwirkung geschlossen werden.

Ausführungsbeispiele der Erfindung sind in den Figuren näher erläutert.

Es zeigen
- Figur 1: schematisch die Vorgehensweise des Verfahrens,
- Figur 2, 3, 4: ein Bauteil mit einem Riss, das mit dem erfindungsgemäßen Verfahren behandelt wird,
- Figur 5: ein weiteres Ausführungsbeispiel des erfindunsgemäßen Verfahrens,
- Figur 6: eine Gasturbine,
- Figur 7: eine Brennkammer,
- Figur 8: eine Dampfturbine.

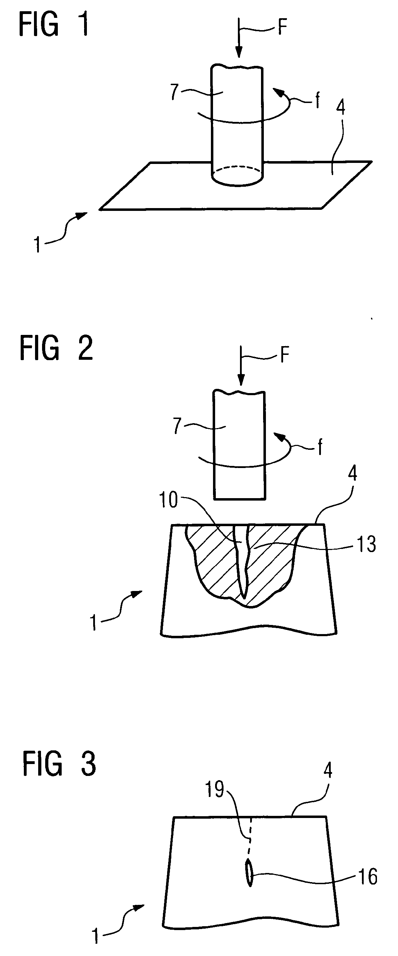

Figur 1 zeigt ein Bauteil 1 mit seiner Oberfläche 4, auf die eine Mechtrode 7 aufgesetzt wird.
Die Mechtrode 7 wird mit einer bestimmten Kraft F, insbesondere senkrecht auf die Oberfläche 4 des Bauteils 1 aufgedrückt, wobei die Mechtrode 7 mit einer bestimmten Frequenz f um ihre Achse rotiert wird, so dass durch Reibung ein Energieeintrag in die Oberfläche des Bauteils 1 erfolgt. Dabei wird die Makro- und/oder Mikrostruktur des Bauteils 1 im behandelten Bereich verändert.
Unter der Mikrostruktur sind beispielsweise die Korngröße, die Phasen und Phasenanteile des Materials, insbesondere des Matrixmaterials des Bauteils 1 zu verstehen, während unter Makrostruktur insbesondere die Ausprägung von Oberflächenrissen zu verstehen ist.

Die Mechtrode 7 ist aus einem hochfesten, hochzähen und hochschmelzenden Material gebildet, beispielsweise aus einer schnellarbeitsstahlähnlichen Legierung, beispielsweise mit hohem Anteil an Wolfram, Molybdän, Chrom.

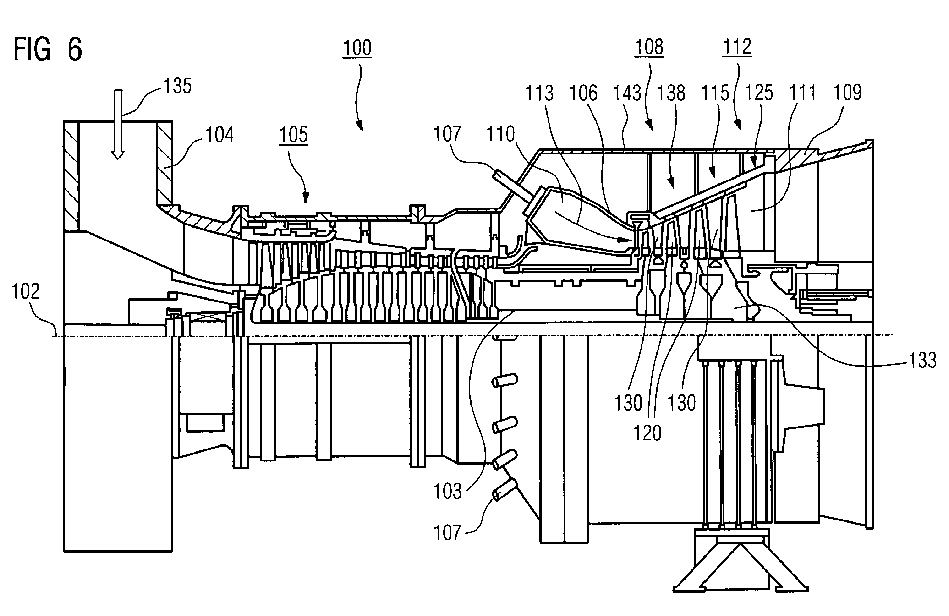

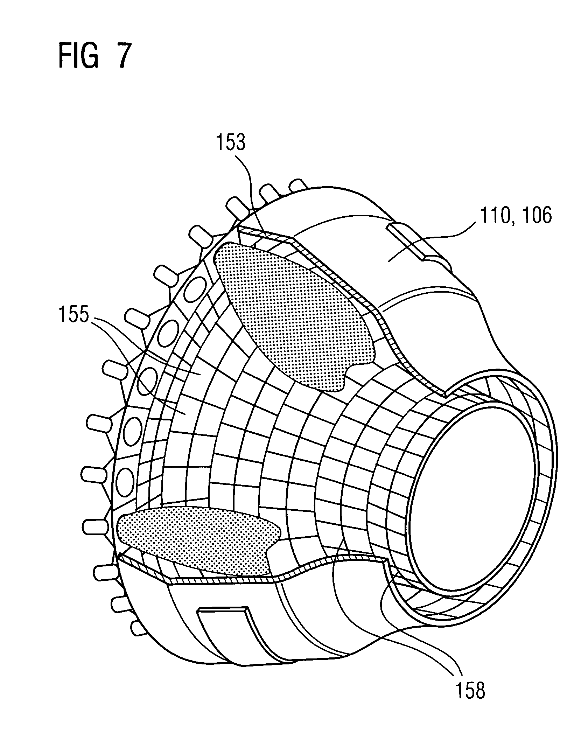

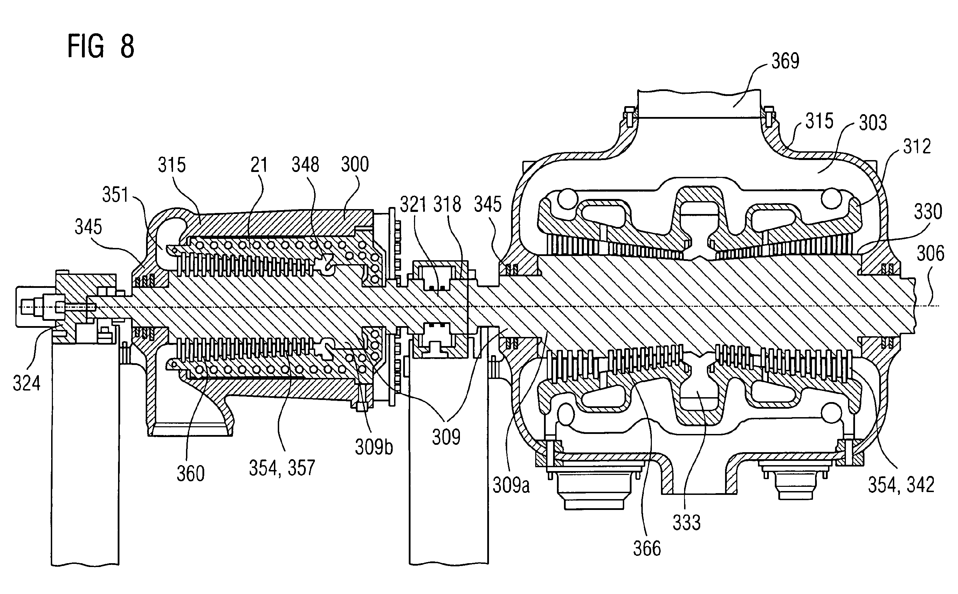

Figur 2 zeigt ein Bauteil 1 mit einem Riss 10.
Ein solches Bauteil 1 ist beispielsweise ein Bauteil 1 einer Strömungsmaschine wie beispielsweise einer Gasturbine 100 (Fig. 6) zur Elektrizitätserzeugung oder einer Flugzeugturbine sowie einer Dampfturbine 300, 303 (Fig. 8), insbesondere eine Turbinenschaufel 120, 130 oder ein Teil einer Brennkammer 110 (Fig. 7).
Bei der Neuherstellung eines solchen Bauteils 1 oder nach einem Betriebseinsatz des Bauteils 1 (von einer Wiederaufarbeitung) sind vielfach Risse 10 in dem Bauteil 1 vorhanden.

Eine Wiederverwendung (Refurbishment) des Bauteils 1 kann nur sinnvoll durchgeführt werden, indem die Risse 10 verschlossen werden.

Dies kann besonders vorteilhaft mit dem erfindungsgemäßen Verfahren erfolgen.
Dabei wird die Mechtrode 7 mit einer bestimmten Kraft F und unter Rotation mit einer bestimmten oder veränderbaren Frequenz f auf die Oberfläche 4 in der Nähe des Risses 10 aufgedrückt.
Dadurch wird ein Oberflächenbereich 13 in der Nähe des Risses 10 zumindest teilweise plastifiziert, insbesondere ohne dass es zu Aufschmelzungen kommt, so dass sich der Riss 10 (0,3 - 0,5 mm Breite) vollständig oder zumindest teilweise wieder verschließt. Die Länge des Risses 10 kann ein Vielfaches der Breite des Risses 10 betragen.
Somit wurde die Makrostruktur verändert.

Der Riss 10 kann vorab beispielsweise durch Säure oder Salzbadbehandlung von Verunreinigungen, insbesondere von Oxiden gesäubert werden und wird dann ohne Zusatzmaterial mittels des erfindungsgemäßen Verfahrens wieder verschlossen. Metallische Oberflächen lassen sich so leichter plastifizieren und miteinander verbinden.

Bei dem erfindungsgemäßen Verfahren handelt es sich also um ein Fügen von artgleichem Material ohne die für herkömmliche Füge- oder Schweißverfahren typischen Heiß- oder Wärmebehandlungsrisse sowie andere nachteilige Gefügeausbildungen.

Da bei dem erfindungsgemäßen Verfahren die maximale Prozesstemperatur durch entsprechende Wahl der für die Wärmeentwicklung maßgeblichen Verfahrensparameter geringer ist als bei den üblichen Verfahren, wandert also keine Erstarrungsfront als Folge eines Aufschmelzens durch das Material, die zu Spannungen oder Rissbildung aufgrund der Volumenänderung beim Übergang flüssig - fest führen kann.
Es treten nur deutlich kleinere Temperaturgradienten innerhalb des Bauteils 1 auf, und somit bilden sich kleinere oder keine Spannungsgradienten bei diesen Temperaturen aus. Das so behandelte Bauteil 1 weist daher für den weiteren betrieblichen Einsatz eine geringere Rissanfälligkeit auf als etwa ein Bauteil, bei dem Risse durch Auftragsschweißen oder Löten geschlossen wurden.

Das Verfahren eignet sich auch um Mikrorisse zu schließen.

Je nach Anwendungsfall kann die Mechtrode 7 und/oder das Bauteil 1 während der Durchführung des erfindungsgemäßen Verfahrens gekühlt oder erwärmt werden.

Es kann sich eine Wärmebehandlung lokal begrenzter Bereiche 13 des Bauteils 1 oder des ganzen Bauteils 1 anschließen.

Das Verfahren wird insbesondere angewendet beim sogenannten Refurbishment von Gasturbinenbauteilen. Gasturbinenbauteile, die im Einsatz waren, weisen degradierte Schichten auf, die mittels bekannter Verfahren entfernt werden. Oft wird auch das Substrat der beschichteten Turbinenschaufel 120, 130 angegriffen bzw. es haben sich Risse 10 gebildet. Solche Risse, auch verschlossene (innere) Risse 10 können mittels Wirbelstromverfahren sowie anderen Messverfahren detektiert werden. Die Risse 10 werden wie oben beschrieben durch das erfindungsgemäße Verfahren verschlossen.
Daran kann sich eine Wärmebehandlung anschließen.

In einem der letzten Verfahrensschritte findet dann eine Wiederbeschichtung der Oberfläche 4 des Bauteils 1 statt, so dass das Bauteil 1 danach wieder voll einsatzfähig ist.

Figur 3 zeigt ein Bauteil 1 gemäß Figur 2, das mit dem erfindungsgemäßen Verfahren behandelt wurde.

Der Riss 10 (Figur 2) ist bspw. nur teilweise verschlossen worden. Der hierzu erforderliche Energieeintrag war geringer als für ein vollständiges Schließen. Der Bereich, der verschlossen ist, ist gestrichelt angedeutet und mit dem Bezugszeichen 19 (oberer Bereich) versehen. Unterhalb der Oberfläche 4 ist noch ein Teilbereich 16 des ursprünglichen Risses 10 vorhanden. Dieser Riss 10 ist jedoch für die Lebensdauer des Bauteils 1 nicht entscheidend, da das Risswachstum in diesem Fall unkritisch ist.

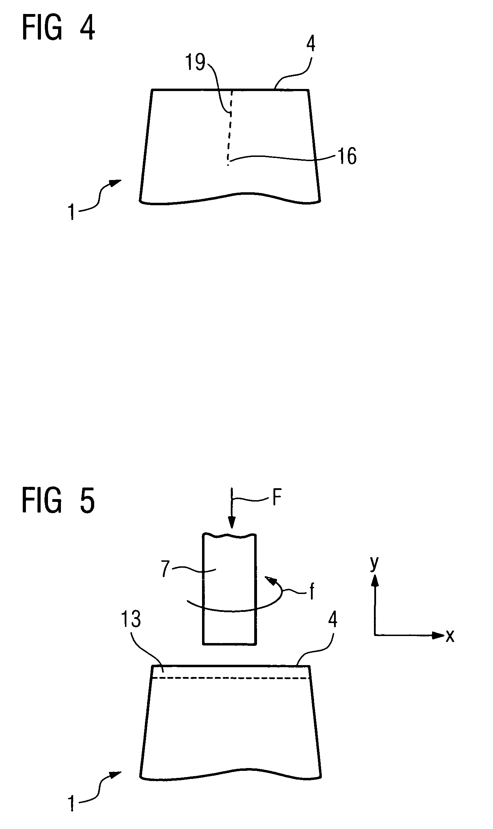

Ebenso kann der Riss 10 auch vollständig verschlossen werden (Figur 4).
Dabei ist die Mechtrode 7 so geformt (beispielsweise durch kleine Aufstandfläche, dass die Plastifizierung vor allem in die Tiefe hinein und nicht so sehr in die Breite erfolgt.

Figur 5 zeigt ein weiteres Ausführungsbeispiel des erfindungsgemäßen Verfahrens.

In diesem Beispiel wird das Bauteil 1 oder die Mechtrode 7 in x- und y-Richtung, d.h. in der Ebene der Oberfläche 4 des Bauteils 1 verschoben. Somit erfährt ein größerer Teil der Oberfläche 4 eine Veränderung der Makro- oder Mikrostruktur. Die Korngrößen betragen unterhalb des Oberflächenbereichs 13 im Substrat üblicherweise 50 bis 100µm bei konventionell gegossenen (conventional cast) Superlegierungen. Insbesondere kann durch das erfindungsgemässe Verfahren eine feinere Körnung deutlich unterhalb 50 µm, insbesondere unterhalb 30µm in einem Oberflächenbereich 13, hier ein Schichtbereich bis zu einer bestimmten Tiefe unterhalb der Oberfläche 4, erzeugt werden. Vorzugsweise liegen die Korngrößen unterhalb 10µm und bspw. zwischen 1 und 10µm.
Diese beispielhafte Korngröße stellt nicht unbedingt im eigentlichen Sinne eine Korngröße eines Erstarrungs- oder Rekristallisationsgefüge dar, sondern die Quasi-Korngröße eines durch starke thermoplastische Deformation eines grobkörnigen Ausgangsgefüges entstandenen Oberflächenbereiches mit sehr kleinen kornähnlichen Bereichen, die voneinander durch Kleinwinkelkorngrenzen (geringer Winkelversatz zwischen den kristallographischen Orientierungen benachbarter Bereiche) begrenzt sind.
Man könnte es einen quasi-amorphen Zustand nennen.
Auch Zwischenzustände zwischen quasi-amorph und kristallin sind denkbar.
Der Oberflächenbereich 13 hat eine Dicke von 0,5mm, insbesondere 0,2 bis 0,3 mm.

Die Mechtrode 7 verformt sich während der Durchführung des Verfahrens kaum oder gar nicht. Auch wird kein Material von der Mechtrode 7 auf die Oberfläche 4 des Bauteils 1 aufgetragen, wie dies sonst bei Reib-Rühr-Schweißverfahren der Fall ist.

Wenn man für die Bauteile 1 der Gasturbine 100 (Fig. 6) eisen-, nickel- oder kobaltbasierte Superlegierungen verwendet, wird infolge der Wärmentwicklung durch das erfindungsgemäße Verfahren die γ'-Phase aufgelöst, jedoch bleibt man unterhalb der Soliduslinie, d.h. Material wird nicht aufgeschmolzen.

Die Auflösung der γ'-Phase ist notwendig, damit Risse zusammengefügt werden können. Erst durch die Auflösung der γ'-Phase werden die notwendigen mechanischen Eigenschaften erreicht, dass eine Plastifizierung des Materials erfolgen kann, ohne die eine Rissschließung nicht möglich wäre.

Durch das Verfahren kann auch die Korngröße verändert werden. Insbesondere wird bei den eisen-, nickel- oder kobaltbasierten Superlegierungen durch das Verfahren eine feinkörnigere Struktur im Oberflächenbereich 13 erreicht. Dadurch erfolgt eine Verfestigung des Materials in dem jeweils behandelten Oberflächenbereich 13, so dass eine geringere Rissanfälligkeit von der Oberfläche 4 gegeben ist.

Bei der Behandlung des Bauteils 1 wird das Bauteil 1 warm, so dass sich die γ'-Phase auflöst. Nach der Beendigung des Verfahrens kühlt sich das Bauteil 1 ab und die γ'-Phase wird sehr fein wieder ausgeschieden.

Das durch die erfindungsgemäße Behandlung unter der Oberfläche 4 gebildete sehr feinkörnige Gefüge weist keine Korngrenzen im Sinne von aufeinander zugewachsenen Kristallationsfronten mit Ansammlung von höherschmelzenden Ausscheidungen und Entmischungssäumen im korngrenznahen Bereich auf.
Das Gefüge, das so eingestellt wird, entspricht einem Gefüge einer hochintensiven Schmiedebearbeitung. Durch die mechanisch induzierte thermische Behandlung erfolgt nämlich eine Homogenisierung derartiger Diskontinuitäten, so dass zwar viele korngrenzenähnliche Bereiche mit entsprechender Behinderung von Diffusionen, Platzwechselvorgängen und Versetzungswanderungen existieren, die aber eine vergleichsweise geringe Schwächung des Oberflächenbereiches, wie z.B. aufgeweichte Korngrenzen, mit meist inkohärenten Korngrenzenausscheidungen bewirken.
Außerdem ist ein kontinuierlicher stofflicher Übergang zum Gefüge des Grundwerkstoffs gegeben.

Die Kornverfeinerung verbessert die Zähigkeit des Werkstoffs in der Bauteiloberfläche. Dies wiederum verbessert die LCF-(Low Cycle Fatigue) und HCF-(High Cycle Fatigue) Eigenschaften, da die Rissinitiierung und Rissausbreitung an der Oberfläche 4 durch die plastische Verformung (Zähigkeit) verlangsamt oder verhindert wird. Des weiteren werden sehr kleine, zur Oberfläche geöffnete Werkstofftrennungen mit Breiten bis zu 50 oder 100 µm (Mikrorisse), welche nicht sicher mit derzeitig angewendeten Prüfmethoden detektiert werden können, stoffflüssig verbunden.

Gegebenenfalls müssen durch eine anschließende Wärmebehandlung grundwerkstoffähnliche Gefügezustände beispielsweise tiefenselektiv wieder hergestellt werden.

Die Figur 6 zeigt eine Gasturbine 100 in einem Längsteilschnitt.

Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109. Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei am Stator 143 befestigt, wohingegen die Laufschaufeln 120 einer Reihe 125 mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet. Um den dort herrschenden Temperaturen standzuhalten, werden diese mittels eines Kühlmittels gekühlt. Ebenso können die Schaufeln 120, 130 Beschichtungen gegen Korrosion (MCrAlX; M = Fe, Co, Ni, X=Y, Seltenen Erden) und Wärme (Wärmedämmschicht, beispielsweise ZrO₂, Y₂O₄-ZrO₂) aufweisen.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 7 zeigt eine Brennkammer 110.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

In Figur 8 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließendes Außengehäuse 315 auf. Die Hochdruck-Teilturbine 300 ist beispielsweise in Topfbauart ausgeführt. Die Mitteldruck-Teilturbine 303 ist zweiflutig ausgeführt. Es ist ebenfalls möglich, dass die Mitteldruck-Teilturbine 303 einflutig ausgeführt ist. Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine Wellenabschirmung, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

Die Turbinenwelle 309 ist aus zwei Teilturbinenwellen 309a und 309b zusammengesetzt, die im Bereich des Lagers 318 fest miteinander verbunden sind.

## Patentansprüche

1. Verfahren zur Bearbeitung eines Bauteils (1, 120, 130, 155),
bei dem eine Mechtrode (7) unter Kraft auf eine Oberfläche (4) des Bauteils (1) einwirkt,
wobei die Mechtrode (7) gedreht wird,
**dadurch gekennzeichnet, dass**
ein Oberflächenbereich (13) des Bauteils (1, 120, 130, 155) zur gezielten Veränderung der Makro- und/oder Mikrostruktur des Oberflächenbereichs (13) mit der Mechtrode (7) behandelt wird, wobei dabei keine Beschichtung erfolgt.

2. Verfahren nach Anspruch 1,
**dadurch gekennzeichnet, dass**
ein Oberflächenbereich (13) des Bauteils (1, 120, 130, 155) plastifiziert wird.

3. Verfahren nach Anspruch 1 oder 2,
**dadurch gekennzeichnet, dass**
ein Riss (10) an der Oberfläche (4) des Bauteils (1) geschlossen wird,
wodurch die Makrostruktur verändert wird.

4. Verfahren nach Anspruch 3,
**dadurch gekennzeichnet, dass**
der Riss (10) nur in seinem oberen Bereich (19) verschlossen wird.

5. Verfahren nach Anspruch 3 oder 4,
**dadurch gekennzeichnet, dass**
der Riss (10) ohne weitere Zusatzmittel verschlossen wird.

6. Verfahren nach Anspruch 1 oder 2,
**dadurch gekennzeichnet, dass**
in einem Oberflächenbereich (13) des Bauteils (1) eine Phasenänderung eines Matrixmaterials des Bauteils (1) erfolgt.

7. Verfahren nach Anspruch 1, 2, 3 oder 5,
**dadurch gekennzeichnet, dass**
ein Oberflächenbereich (13) des Bauteils (1) nicht aufgeschmolzen wird.

8. Verfahren nach Anspruch 1 oder 2,
**dadurch gekennzeichnet, dass**
eine feinkörnigere Mikrostruktur in einem Oberflächenbereich (13) des Bauteils (1) erzeugt wird.

9. Verfahren nach Anspruch 1,
**dadurch gekennzeichnet, dass**
bei der Mechtrode (7) kein oder kaum Materialabtrag erfolgt.

10. Verfahren nach Anspruch 1 oder 9,
**dadurch gekennzeichnet, dass**
die Mechtrode (7) senkrecht auf die Oberfläche (4) des Bauteils (1) einwirkt.

11. Verfahren nach Anspruch 1, 3, 4, 6 oder 8,
**dadurch gekennzeichnet, dass**
in einem ersten Schritt eine Beschichtung des Bauteils (1) entfernt wird,
in einem weiteren Verfahrensschritt die Mechtrode (7) eingesetzt wird,
insbesondere um Risse (10) zumindest an der Oberfläche (4) des Bauteils (1) zu verschliessen,
und in einem der letzten Verfahrensschritten eine Beschichtung des Bauteils (1) erfolgt.

12. Verfahren nach Anspruch 1,
**dadurch gekennzeichnet, dass**
nach der Behandlung mit der Mechtrode (79 eine Wärmebehandlung des Bauteils (1) zur Einstellung oder Wiederherstellung gewünschter Eigenschaften erfolgt.

13. Verfahren nach Anspruch 1 oder 11,
**dadurch gekennzeichnet, dass**
das Bauteil (1) ein Bauteil einer Dampf- (300, 303) oder Gasturbine (100), insbesondere eine Turbinenschaufel (120, 130) oder eine Auskleidung (155) einer Brennkammer (110), ist.

14. Verfahren nach Anspruch 1 oder 13,
**dadurch gekennzeichnet, dass**
für das Bauteil (1) eine eisen-, nickel- oder kobaltbasierte Superlegierung verwendet wird.

15. Verfahren nach Anspruch 1, 11, 13 oder 14,
**dadurch gekennzeichnet, dass**
mit dem Verfahren ein wieder aufzuarbeitendes Bauteil (1, 120, 130, 155) behandelt wird.

16. Verfahren nach Anspruch 1, 11, 13 oder 14,
**dadurch gekennzeichnet, dass**
mit dem Verfahren ein neu hergestelltes Bauteil (1, 120, 130, 155) behandelt wird.

17. Bauteil (1, 120, 130);
das eine Oberfläche (4) und
einen Oberflächenbereich (13) unterhalb der Oberfläche (4) aufweist,
der feinkörniger ausgebildet ist als der Bereich unterhalb dieses Oberflächenbereichs (13).

18. Bauteil nach Anspruch 17,
**dadurch gekennzeichnet, dass**
der Oberflächenbereich (13) einen umgewandelten Bereich unterhalb der Oberfläche (4) darstellt.

19. Bauteil nach Anspruch 17,
**dadurch gekennzeichnet, dass**
der Oberflächenbereich (13) bis zu 0,5mm,
insbesondere 0,2 bis 0,3mm dick ist.

20. Bauteil nach Anspruch 17,
**dadurch gekennzeichnet, dass**
die Korngröße des Oberflächenbereichs (13) deutlich unterhalb 50µm liegt.

21. Bauteil nach Anspruch 20,
**dadurch gekennzeichnet, dass**
die Korngröße des Oberflächenbereichs (13) unterhalb 30µm, insbesondere bei 1 bis 10µm liegt.

22. Bauteil nach Anspruch 17, 20 oder 21,
**dadurch gekennzeichnet, dass**
die Korngröße unterhalb des Oberflächenbereichs (13) bei 50 bis 100µm liegt.

23. Bauteil nach Anspruch 17 oder 18,
**dadurch gekennzeichnet, dass**
das Bauteil (1, 120, 130) einen Riss (10) aufweist, der nur in seinem oberen Bereich (19) verschlossen ist.
